# EUROPEAN PATENT APPLICATION

(11) **EP 4 403 359 A1**
(43) Date of publication of application: **24.07.2024**
(21) Application number: 22869913.8
(22) Date of filing: 09.09.2022
(51) Int. Cl.: B32B 27/32, B32B 15/12, B32B 27/10, B65D 65/40

(54) **GAS BARRIER LAYERED BODY AND PACKAGING BAG**

(30) Priority: 16.09.2021 JP 2021151463
(71) Applicant: Toppan Holdings Inc., Tokyo 110-0016 (JP)
(72) Inventor: KOJIMA, Yumiko, Tokyo 110-0016 (JP); KAMINAGA, Junichi, Tokyo 110-0016 (JP); KOSHIYAMA, Yoshiki, Tokyo 110-0016 (JP); ISHII, Rika, Tokyo 110-0016 (JP); WAKABAYASHI, Hiroyuki, Tokyo 110-0016 (JP)
(74) Representative: Hoffmann Eitle
(86) International application number: PCT/JP2022/033930
(87) International publication number: WO 2023/042766

(57) **Abstract**

A gas barrier laminate according to the present disclosure includes a paper substrate; an anchor coat layer containing at least one of a polyvinyl alcohol-based resin, and a polyolefin having polar groups; a vapor deposition layer; an adhesive layer; and a sealant layer laminated in this order.

## Description

### [Technical Field]

The present disclosure relates to gas barrier laminates and packaging bags.

### [Background Art]

Packaging materials are used in many fields, such as food products, beverages, pharmaceutical products and chemical products, depending on the contents. Packaging materials are required to have barrier properties (gas barrier properties) against water vapor and the like, which can cause deterioration of the contents.

In recent years, due to the growth in environmental awareness triggered by issues of marine plastic waste and the like, the plastic-free movement is growing. From the perspective of reducing the amount of plastic materials used, the use of paper instead of plastic materials is being considered in various fields.

For example, PTL 1 discloses a packaging material having a paper substrate layer, a dry lamination adhesive layer, and a specific sealant layer laminated adjacent to the dry lamination adhesive layer.

### [Citation List]

### [Patent Literature]

PTL 1: JP 2012-250486 A

### [Summary of Invention]

### [Technical Problem]

Paper is easy to process due to its capability of retaining creases (dead-fold properties). However, according to the inventors of the present invention, when packaging bags (pillow packages, three-sided packages and gusset packages) have shaper folds, which may cause cracking in the layer, the gas barrier properties may be reduced, and in this regard, there is room for improvement.

In addition, from the viewpoint of the Act on the Promotion of Effective Utilization of Resources, it is also required to reduce the amount of plastic materials used in the gas barrier laminate.

The present disclosure provides a gas barrier laminate having dead-fold properties, which are characteristic to paper, and high water vapor barrier properties even after being folded, while contributing to reduction in the amount of plastic materials used, and provides a packaging bag including the gas barrier laminate.

### [Solution to Problem]

A gas barrier laminate according to an aspect of the present disclosure includes: a paper substrate; an anchor coat layer containing at least one of a polyvinyl alcohol-based resin, and a polyolefin having polar groups; a vapor deposition layer; an adhesive layer; and a sealant layer laminated in this order.

The above anchor coat layer may contain the polyolefin having polar groups, and the polyolefin having polar groups may contain at least one selected from the group consisting of a carboxyl group, a salt of a carboxyl group, a carboxylic anhydride and a carboxylic acid ester.

The above anchor coat layer may contain the polyolefin having polar groups, and the polyolefin having polar groups may be a copolymer of an acrylic acid ester and a maleic anhydride.

The above anchor coat layer may contain the polyolefin having polar groups, and the polyolefin having polar groups may be an ethylene-vinyl acetate copolymer.

The above anchor coat layer may contain the polyolefin having polar groups, and the polyolefin having polar groups may be an ethylene-glycidyl methacrylate copolymer.

The above anchor coat layer may contain the polyvinyl alcohol-based resin.

The above adhesive layer may be a cured product of a resin composition containing an epoxy resin and an epoxy resin curing agent, and the epoxy resin curing agent may be a reaction product of metaxylylene diamine or paraxylylene diamine and an unsaturated carboxylic acid represented by formula (1) and/or derivatives thereof. 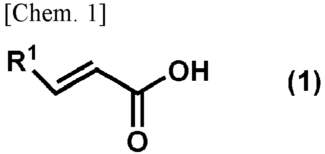 [In formula (1), R¹ represents an alkyl group having 1 to 8 carbon atoms, an aralkyl group or an aryl group having 1 to 8 carbon atoms.]

The above adhesive layer may be a cured product of a resin composition containing a polyol having two or more hydroxyl groups per molecule and an isocyanate compound having two or more isocyanate groups per molecule.

The above paper substrate may provide 50 mass% or more of the weight of the entire gas barrier laminate.

A packaging bag according to another aspect of the present disclosure includes the above gas barrier laminate.

The above packaging bag may have a fold.

### [Advantageous Effects of Invention]

The present disclosure provides a gas barrier laminate having dead-fold properties, which are characteristic to paper, and high water vapor barrier properties even after being folded, while contributing to reduction in the amount of plastic materials used, and provides a packaging bag including the gas barrier laminate.

### [Brief Description of Drawings]

Fig. 1 is a schematic cross-sectional view illustrating a gas barrier laminate according to an embodiment of the present disclosure.
Fig. 2 is a perspective view illustrating a packaging bag according to an embodiment of the present disclosure.

### [Description of Embodiments]

With reference to the drawings as appropriate, embodiments of the present disclosure will be described in detail. It should be noted that the present disclosure is not limited to the following embodiments.

### <Gas Barrier Laminate>

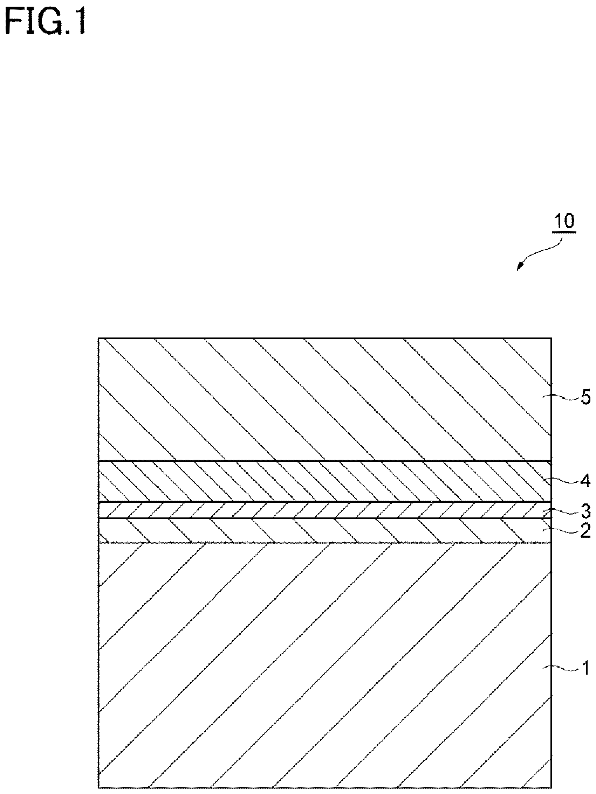

Fig. 1 is a schematic cross-sectional view illustrating a gas barrier laminate according to an embodiment. A gas barrier laminate 10 according to an embodiment includes a paper substrate 1, an anchor coat layer 2, a vapor deposition layer 3, an adhesive layer 4 and a sealant layer 5 laminated in this order. The anchor coat layer 2 contains at least one of a polyvinyl alcohol-based resin, and a polyolefin having polar groups.

### [Paper Substrate]

The paper substrate 1 is not particularly limited, and may be appropriately selected depending on the use of the packaging bag to which the gas barrier laminate 10 is applied. There is no particular restriction as long as the paper is mainly composed of pulp derived from plants. Examples of the paper substrate 1 include high-quality paper, special high-quality paper, coated paper, art paper, cast-coated paper, simili paper, kraft paper and glassine paper. The thickness of the paper substrate 1 may be, for example, 20 g/m² to 500 g/m², and preferably 30 g/m² to 100 g/m².

The paper substrate 1 may be provided with a coat layer at least on a side in contact with the anchor coat layer 2. The coat layer can prevent the anchor coat layer from infiltrating into the paper and also serve as a filler that fills the unevenness of the paper to form a uniform anchor coat layer without defects. As a result, the gas barrier laminate 10 has improved gas barrier properties. The coat layer may contain, for example, various copolymers such as styrene-butadiene, styrene-acrylic and ethylene-vinyl acetate-based copolymers, polyvinyl alcohol-based resin, cellulose-based resin, and paraffin (wax) as a binder resin, and may contain clay, kaolin, calcium carbonate, talc, mica, or the like as a filler.

The thickness of the coat layer is not particularly limited, but may be, for example, 1 µm to 10 µm, and preferably 3 µm to 8 µm.

The weight of the paper substrate is preferably 50 mass% or more, more preferably 70 mass% or more, and still more preferably 80 mass% or more relative to the entire gas barrier laminate. When the weight of the paper relative to the entire gas barrier laminate is 50 mass% or more, the amount of plastic materials used can be sufficiently reduced, providing a paper-based gas barrier laminate with improved recyclability.

### [Anchor Coat Layer]

The anchor coat layer 2 is provided on a surface of the paper substrate 1 and improves adhesion between the paper substrate 1 and the vapor deposition layer 3, which will be described later, and gas barrier properties of the gas barrier laminate. The anchor coat layer 2 contains at least one of a polyvinyl alcohol-based resin, and a polyolefin having polar groups. Accordingly, the gas barrier laminate 10 has excellent gas barrier properties (particularly, water vapor barrier properties). The anchor coat layer 2 preferably contains a polyvinyl alcohol-based resin since it has further improved water vapor barrier properties and oxygen barrier properties.

When the anchor coat layer 2 contains a polyolefin having polar groups, a dense film can be formed due to crystallinity of the polyolefin, which exhibits water vapor barrier properties. The crystallinity of the polyolefin provides water vapor barrier properties, and the polar groups provides adhesion to the vapor deposition layer 3.

The polyolefin having polar groups may include at least one selected from the group consisting of a carboxyl group, a salt of a carboxyl group, a carboxylic anhydride and a carboxylic acid ester.

As the polyolefin having polar groups, ethylene or propylene copolymerized with unsaturated carboxylic acids (unsaturated compounds having carboxyl groups such as acrylic acid, methacrylic acid and maleic anhydride) or unsaturated carboxylic acid esters, and salts of carboxylic acids neutralized with basic compounds may be used, and those copolymerized with vinyl acetate, epoxy-based compounds, chlorine-based compounds, urethane-based compounds, polyamide-based compounds, or the like may also be used.

Specific examples of the polyolefin having polar groups include copolymers of an acrylic ester and a maleic anhydride, ethylene-vinyl acetate copolymers, ethylene-glycidyl methacrylate copolymers, and the like.

The polyvinyl alcohol-based resin may be, for example, a fully saponified polyvinyl alcohol-based resin, a partially saponified polyvinyl alcohol-based resin, a modified polyvinyl alcohol-based resin or an ethylene-vinyl alcohol copolymer resin. The polymerization degree of the polyvinyl alcohol-based resin is preferably 300 or more and 1,700 or less. The polymerization degree of 300 or more provides the gas barrier laminate with excellent gas barrier properties and bending resistance, and the polymerization degree of 1,700 or less causes the polyvinyl alcohol-based resin coating liquid, which will be described later, to have low viscosity, improving the coatability.

When the anchor coat layer 2 contains a polyvinyl alcohol-based resin, the anchor coat layer 2 has excellent flexibility, and prevents cracking from occurring in the vapor deposition layer, which will be described later, after bending (after folding) to suppress deterioration of the gas barrier properties and improve adhesion between the vapor deposition layer and the anchor coat layer 2.

The anchor coat layer 2 may contain other components in addition to the above-mentioned polyolefin and polyvinyl alcohol-based resin. Examples of other components include resins such as polyolefins other than the above-mentioned polyolefins, polyacrylics, polyesters, polyurethanes, polyethyleneimines, polylactic acids, polyamides, starch and its derivatives and cellulose derivatives, and additives such as silane coupling agents, organic titanates, glycerins, glycols, caseins and waxes.

The total content of the polyolefin and polyvinyl alcohol-based resin in the anchor coat layer 2 may be, for example, 50 mass% or more, preferably 70 mass% or more, more preferably 90 mass% or more, and still more preferably 100 mass%.

The thickness of the anchor coat layer 2 may be, for example, 1 µm or more, preferably 2 µm or more, and may be 20 µm or less, preferably 10 µm or less, and more preferably 5 µm or less. When the thickness of the anchor coat layer 2 is 1 µm or more, the unevenness of the paper substrate 1 can be efficiently filled, and the vapor deposition layer 3 described later can be uniformly laminated. Further, when the thickness of the anchor coat layer 2 is 20 µm or less, the vapor deposition layer 3 can be uniformly laminated while reducing the cost.

Examples of solvents contained in the anchor coat layer 2 include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate and butyl acetate. These solvents may be used singly or in combination of two or more. Of these solvents, from the viewpoint of coatability, the solvent is preferably methyl alcohol, ethyl alcohol, isopropyl alcohol, toluene, ethyl acetate, methyl ethyl ketone or water. Further, from the environmental viewpoint, the solvent is preferably methyl alcohol, ethyl alcohol, isopropyl alcohol or water.

The anchor coat layer 2 can be formed by applying a coating liquid containing at least one of the above-mentioned polyolefin and polyvinyl alcohol-based resin, and a solvent on the paper substrate, followed by drying. From the perspective of preventing blocking, the polyolefin in the coating liquid preferably has a large particle size in order to reduce the contact area. Although not particularly limited, the specific particle size may be 1 nm or greater, preferably 0.1 µm or greater, and may be 1 µm or less, preferably 0.7 µm or less, and more preferably 0.5 µm or less.

### [Vapor Deposition Layer]

The vapor deposition layer 3 is a layer formed by vapor-depositing a metal or an inorganic compound. The vapor deposition layer may be obtained by vapor-depositing aluminum, or may contain aluminum oxide (AlOₓ), silicon oxide (SiOₓ), or the like.

The thickness of the vapor deposition layer 3 may be appropriately set depending on the intended use, but is preferably 10 nm or more, more preferably 30 nm or more, and still more preferably 50 nm or more, and preferably 300 nm or less, more preferably 100 nm or less, and still more preferably 80 nm or less. When the thickness of the vapor deposition layer 3 is 10 nm or more, the vapor deposition layer 3 may be made adequately continuous with ease, and when the thickness is 300 nm or less, the occurrence of curling or cracking can be adequately minimized, and thus adequate barrier performance and flexibility can be easily achieved.

The vapor deposition layer 3 is preferably formed by vacuum film formation from the viewpoint of oxygen gas barrier performance and film uniformity. Vacuum deposition, sputtering, chemical vapor deposition (CVD), and the like are known as film formation methods, but vacuum deposition is preferred due to high deposition speed and productivity. In particular, film formation using electron beam heating is effective among the vacuum deposition methods since the deposition speed can be easily controlled by an irradiation area, an electron beam current, or the like, and the temperature increase and decrease of the vapor deposition material can be performed in a short time.

### [Adhesive Layer]

The adhesive layer 4 is provided in contact with a surface of the vapor deposition layer 3. The adhesive layer 4 can be made of various materials as long as it adheres the vapor deposition layer 3 and the sealant layer 5 to each other, and examples thereof include cured products of urethane-based adhesives and cured products of epoxy-based adhesives.

### <Urethane-Based Adhesive>

Urethane-based adhesives are resin compositions containing a polyol having two or more hydroxyl groups per molecule and an isocyanate compound having two or more isocyanate groups per molecule. Urethane bonds are formed when a urethane-based adhesive is cured. The urethane-based adhesive is preferably two-part curing type.

The urethane-based adhesive may have gas barrier properties. Gas barrier properties can be imparted to the urethane-based adhesive, for example, by a method using a polyol with a skeleton having gas barrier properties, a method of adding a phosphoric acid modified compound to the above resin composition, or a method of adding a plate-like inorganic compound to the above resin composition. These methods can be used singly or in combination of two or more.

The polyol with a skeleton having barrier properties is preferably one in which the main skeleton is a polyester or polyester polyurethane, and the polyester has a structure derived from an ortho-oriented aromatic dicarboxylic acid or anhydrides thereof. The polyester portion of the main skeleton may be obtained by polycondensation reaction of a polyvalent carboxylic acid and a polyvalent alcohol.

Examples of the polyvalent carboxylic acid include aliphatic polyvalent carboxylic acids and aromatic polyvalent carboxylic acids. Examples of the aliphatic polyvalent carboxylic acids include succinic acid, adipic acid, azelaic acid, sebacic acid, dodecane dicarboxylic acid and 1,4-cyclohexane dicarboxylic acid.

Examples of the aromatic polyvalent carboxylic acids include orthophthalic acid, terephthalic acid, isophthalic acid, pyromellitic acid, trimellitic acid, 1,2-naphthalene dicarboxylic acid, 1,8-naphthalene dicarboxylic acid, 2,3-naphthalene dicarboxylic acid, 1,4-naphthalene dicarboxylic acid, 2,5-naphthalene dicarboxylic acid, 2,6-naphthalene dicarboxylic acid, naphthalic acid, biphenyl dicarboxylic acid, 1,2-bis(phenoxy)ethane-p,p'-dicarboxylic acid and anhydrides of these dicarboxylic acids, and polybasic acids such as p-hydroxybenzoic acid and p-(2-hydroxyethoxy)benzoic acid. The polyvalent carboxylic acids can be used singly or in combination of two or more.

The polyvalent carboxylic acid is preferably an ortho-oriented aromatic dicarboxylic acid or anhydrides thereof. The content of the ortho-oriented aromatic dicarboxylic acid or anhydrides thereof relative to the total amount of the polyvalent carboxylic acid components constituting the polyester is preferably 70 to 100 mass%.

Examples of the ortho-oriented aromatic dicarboxylic acid include orthophthalic acid, 1,2-naphthalene dicarboxylic acid, 1,8-naphthalene dicarboxylic acid, 2,3-naphthalene dicarboxylic acid and anhydrides of these dicarboxylic acids.

Examples of the polyvalent alcohol include aliphatic polyvalent alcohols and aromatic polyvalent phenols. Examples of the aliphatic polyvalent alcohols include ethylene glycol, propylene glycol, butylene glycol, neopentyl glycol, cyclohexanedimethanol, 1,5-pentanediol, 3-methyl-1,5 pentanediol, 1,6-hexanediol, methyl pentanediol, dimethyl butanediol, butyl ethyl propanediol, diethylene glycol, triethylene glycol, tetraethylene glycol, dipropylene glycol and tripropylene glycol.

Examples of the aromatic polyvalent phenols include hydroquinone, resorcinol, catechol, naphthalenediol, biphenol, bisphenol A, hisphenol F and tetramethylbiphenol, and ethylene oxide extension products and hydrogenated alicyclics thereof.

The isocyanate compound may be an aromatic compound having an aromatic ring, an aliphatic compound having no aromatic ring, a low molecular compound, a high molecular compound, a diisocyanate compound having two isocyanate groups or a polyisocyanate compound having three or more isocyanate groups. The isocyanate compound may be a blocked isocyanate compound obtained by addition reaction with an isocyanate blocking agent.

The isocyanate compound is preferably a polyisocyanate compound from the viewpoint of adhesiveness of the adhesive layer 4. Since the isocyanate compound imparts oxygen barrier properties to the adhesive layer 4, an isocyanate compound having an aromatic ring is preferred, and an isocyanate compound containing a metaxylene skeleton is particularly preferred.

Examples of the isocyanate compound include tetramethylene diisocyanate, hexamethylene diisocyanate, toluene diisocyanate, diphenylmethane diisocyanate, hydrogenated diphenylmethane diisocyanate, metaxylylene diisocyanate, hydrogenated xylylene diisocyanate, isophorone diisocyanate, and trimers of these isocyanate compounds. These isocyanate compounds may be, for example, an adduct, a biuret or an allophanate obtained by reacting an isocyanate compound with a low-molecular weight active hydrogen compound, such as ethylene glycol, propylene glycol, metaxylylene alcohol, 1,3-bishydroxyethylbenzene, 1,4-bishydroxyethylbenzene, trimethylolpropane, glycerol, pentaerythritol, erythritol, sorbitol, ethylenediamine, monoethanolamine, diethanolamine, triethanolamine and metaxylylenediamine, and alkylene oxide adducts thereof, or a high-molecular weight active hydrogen compound of various polyester resins, polyether polyols and polyamides.

### <Epoxy-Based Adhesive>

Epoxy-based adhesives are resin compositions containing an epoxy resin and an epoxy resin curing agent.

The epoxy resin may have a saturated bond or an unsaturated bond, or may be any of an aliphatic compound, an alicyclic compound, an aromatic compound and a heterocyclic compound. The epoxy resin preferably contains an aromatic ring or an alicyclic structure in the molecule in order to exhibit high gas barrier properties.

Examples of the epoxy resin include an epoxy resin having a glycidylamino group derived from metaxylylene diamine, an epoxy resin having a glycidylamino group derived from 1,3-bis(aminomethyl)cyclohexane, an epoxy resin having a glycidylamino group derived from diaminodiphenylmethane, an epoxy resin having a glycidylamino group and/or glycidyloxy group derived from para-aminophenol, an epoxy resin having a glycidyloxy group derived from bisphenol A, an epoxy resin having a glycidyloxy group derived from bisphenol F, an epoxy resin having a glycidyloxy group derived from phenol novolac, and an epoxy resin having a glycidyloxy group derived from resorcinol. These epoxy resins may be used singly or in combination of two or more. From the viewpoint of gas barrier properties, an epoxy resin having a glycidylamino group derived from metaxylylene diamine and an epoxy resin having a glycidyloxy group derived from bisphenol F are preferred, and an epoxy resin having a glycidylamino group derived from metaxylylene diamine is more preferred.

The epoxy resin curing agent may be a reaction product of metaxylylene diamine or paraxylylene diamine and an unsaturated carboxylic acid represented by the following formula (1) and/or derivatives thereof. 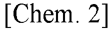 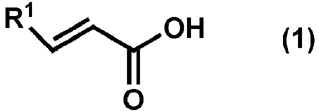 [In formula (1), R¹ represents an alkyl group having 1 to 8 carbon atoms, an aralkyl group or an aryl group having 1 to 8 carbon atoms.]

By using metaxylylene diamine or paraxylylene diamine as a precursor of the epoxy resin curing agent, gas barrier properties are further improved. From the viewpoint of gas barrier properties, metaxylylene diamine is preferred among metaxylylene diamine and paraxylylene diamine. Metaxylylene diamine and paraxylylene diamine may be used singly or in combination of two or more.

By using an unsaturated carboxylic acid represented by the above formula (1) and/or derivatives thereof as a precursor of the epoxy resin curing agent, good adhesiveness is exhibited. Examples of the unsaturated carboxylic acid represented by the above formula (1) and/or derivatives thereof include, but are not limited to, unsaturated carboxylic acids such as crotonic acid, 2-pentenoic acid, 2-hexenoic acid, 4-methyl-2-pentenoic acid, 2-heptenoic acid, 4-methyl-2-hexenoic acid, 5-methyl-2-hexenoic acid, 4,4-dimethyl-2-pentenoic acid, 4-phenyl-2-butenoic acid, cinnamic acid, o-methylcinnamic acid, m-methylcinnamic acid, p-methylcinnamic acid, 2-octenoic acid, 2-nonenoic acid, 2-decenoic acid and 2-undecenoic acid, and derivatives thereof (for example, esters, amides, acid anhydride, acid chlorides, and the like). The unsaturated carboxylic acid represented by the above formula (1) and/or derivatives thereof may be used singly or in combination of two or more.

In order to further improve gas barrier properties and adhesiveness, the unsaturated carboxylic acid represented by the above formula (1) and/or derivatives thereof is preferably at least one selected from the group consisting of unsaturated carboxylic acids and derivatives thereof, in which R¹ in the above formula (1) is a hydrocarbon group having 1 to 3 carbon atoms or a phenyl group, more preferably at least one selected from the group consisting of crotonic acids and crotonic acid derivatives, and still more preferably at least one selected from the group consisting of crotonic acids and crotonic acid esters. The crotonic acid ester is preferably an alkyl ester having 1 to 3 carbon atoms, and more preferably methyl crotonate.

The adhesive layer 4 may be formed using a one-part or two-part curing type adhesive (dry lamination method) or a solvent-free adhesive (non-solvent dry lamination method), or may be formed by extruding a melted resin onto a surface of the vapor deposition layer 3 (extrusion lamination method).

The thickness of the adhesive layer 4 is preferably 0.01 µm or more from the perspective of improving the adhesiveness of the adhesive layer 4, and preferably 10 µm or less from the perspective of further reducing the amount of plastic materials used.

### [Sealant Layer]

The sealant layer 5 is provided in contact with a surface of the adhesive layer 4. Examples of materials of the sealant layer 5 include thermoplastic resins such as polyolefin resins and polyester resins, but polyolefin resins are typically used. Specifically, examples of the polyolefin resins include ethylene-based resins such as low-density polyethylene resin (LDPE), medium-density polyethylene resin (MDPE), linear low-density polyethylene resin (LLDPE), ethylene-vinyl acetate copolymer (EVA), ethylene-α-olefin copolymer and ethylene-(meth)acrylic acid copolymer, polypropylene-based resins such as homopolypropylene resin (PP), propylene-ethylene random copolymer, propylene-ethylene block copolymer and propylene-α-olefin copolymer, and mixtures thereof.

The thickness of the sealant layer is preferably 5 µm or more from the perspective of improving the sealing strength, and preferably 50 µm or less from the perspective of further reducing the amount of plastic materials used.

An embodiment of the present disclosure has been described, but the present disclosure should not be limited to the above embodiment. For example, the gas barrier laminate 10 may further include, as a layer protecting the vapor deposition layer 3, a coating layer between the vapor deposition layer 3 and the adhesive layer 4. Examples of materials of such a coating layer include polyvinyl alcohol-based resins, polyolefin-based resins, polyester-based resins, polyurethane-based resins and epoxy-amine-based resins.

### <Packaging Bag>

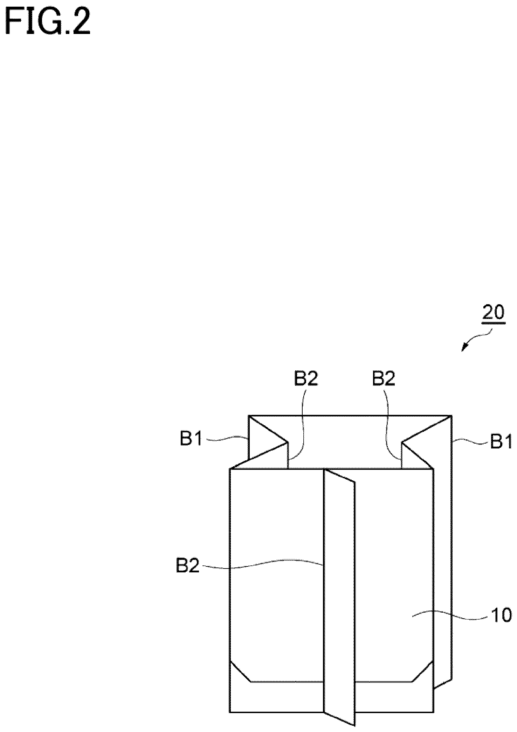

Fig. 2 is a perspective view illustrating a gusset bag 20 formed of the gas barrier laminate 10. A packaging bag is produced by sealing an upper opening of the gusset bag 20. The gusset bag 20 has portions (folded portions B 1 and B2) where the gas barrier laminate 10 is folded. The folded portion B1 is a portion where the gas barrier laminate 10 is valley-folded when viewed from the innermost layer side, while the folded portion B2 is a portion where the gas barrier laminate 10 is mountain-folded when viewed from the innermost layer side.

The packaging bag may be formed by folding a single sheet of the gas barrier laminate in half with the sealant layer 5 inside, folding as appropriate to form a desired shape and then heat-sealing to form a bag shape, or by overlapping two sheets of the gas barrier laminates with the sealant layer 5 inside and then heat-sealing to form a bag shape.

In the packaging bag according to the present embodiment, the heat seal strength may be 2 N or more, and preferably 10 N or more. The upper limit of the heat seal strength is not particularly limited, but may be, for example, 20 N or less.

The packaging bag can contain contents such as food products and pharmaceutical products. In particular, sweets are suitable as contents among the food products. The packaging bag according to the present embodiment can maintain high gas barrier properties even when it has a shape with a folded portion.

In the present embodiment, a gusset bag is described as an example of the packaging bag, but a pillow bag, a three-side sealed bag or a standing pouch, for example, may also be produced using the gas barrier laminate according to the present embodiment.

### Examples

The present disclosure will be described in more detail with reference to the following examples, but the present disclosure is not limited to these examples.

### (Production of Gas Barrier Laminate)

### (Example 1)

A coating liquid containing a salt of a carboxyl group (trade name: CHEMIPEARL S100, ionomer, particle size: < 0.1 µm, solvent: water, IPA, manufactured by Mitsui Chemicals, Inc.) was applied to a surface of paper (clay-coated paper, paper thickness: 50 µm, clay-coated layer thickness: 5 µm, basis weight: 55 g/m²) using a bar coater, and dried in an oven to form an anchor coat layer (thickness: 3 µm). AL vapor deposition was performed onto the anchor coat layer to form an AL vapor deposition layer (thickness: 50 nm). A linear low density polyethylene resin (LLDPE) film (trade name: TUX-MCS, manufactured by Mitsui Chemicals Tohcello, Inc., thickness: 30 µm) as a sealant layer was dry-laminated on the vapor deposition layer using an adhesive (trade name: TAKELAC A525/TAKENATE A52, urethane-based two-part type, manufactured by Mitsui Chemicals, Inc.) to obtain a gas barrier laminate. The thickness of the adhesive layer was 5 µm. The weight of the paper relative to the gas barrier laminate was 53 mass%.

### (Example 2)

BONDINE HX-8290 (trade name, manufactured by Arkema), which was a copolymer of acrylic acid ester and maleic anhydride, was neutralized with triethylamine in a water/IPA mixed solvent to prepare a polyolefin aqueous dispersion. The maleic anhydride was partially or wholly ring-opened in an aqueous solvent to form a carboxylic acid, and again partially or wholly dehydrated and cyclized after drying. A gas barrier laminate was obtained in the same manner as in Example 1, except that an anchor coat layer was formed using the polyolefin aqueous dispersion instead of the coating liquid containing a salt of a carboxyl group. The weight of the paper relative to the gas barrier laminate was 53 mass%.

### (Example 3)

A gas barrier laminate was obtained in the same manner as in Example 1, except that an anchor coat layer was formed using ethylene-glycidyl methacrylate copolymer (trade name: SEPOLSION G515, manufactured by Sumitomo Seika Chemicals Co., Ltd.) instead of the coating liquid containing a salt of a carboxyl group. The weight of the paper relative to the gas barrier laminate was 53 mass%.

### (Example 4)

A gas barrier laminate was obtained in the same manner as in Example 1, except that an anchor coat layer was formed using a coating liquid made of ethylene-vinyl acetate copolymer (trade name: CHEMIPEARL V300, manufactured by Mitsui Chemicals, Inc.) instead of the coating liquid containing a salt of a carboxyl group. The weight of the paper relative to the gas barrier laminate was 53 mass%.

### (Example 5)

A gas barrier laminate was obtained in the same manner as in Example 1, except that a vapor deposition layer was formed of silica instead of AL. The weight of the paper relative to the gas barrier laminate was 53 mass%.

### (Example 6)

A gas barrier laminate was obtained in the same manner as in Example 1, except that an adhesive layer was formed using MAXIVE M-100/C-93 (trade name, manufactured by Mitsubishi Gas Chemical Company, Inc., an epoxy-based adhesive having gas barrier properties) instead of TAKELAC A525/TAKENATE A52. The weight of the paper relative to the gas barrier laminate was 53 mass%.

### (Example 7)

A gas barrier laminate was obtained in the same manner as in Example 1, except that an adhesive layer was formed using PASLIM VM001/108CP (trade name, manufactured by DIC, a urethane-based adhesive having gas barrier properties) instead of TAKELAC A525/TAKENATE A52. The weight of the paper relative to the gas barrier laminate was 53 mass%.

### (Example 8)

An anchor coat layer was formed on a surface of paper and an AL vapor deposition layer was formed on the anchor coat layer in the same manner as in Example 1. A linear low density polyethylene resin (LLDPE) film (trade name: TUX-MCS, manufactured by Mitsui Chemicals Tohcello, Inc., thickness: 30 µm) as a sealant layer was laminated on the vapor deposition layer by non-solvent dry lamination using a NSRD011/NSRD006 (trade name, manufactured by DIC, a solvent-free adhesive having gas barrier properties) to obtain a gas barrier laminate. The thickness of the adhesive layer was 5 µm. The weight of the paper relative to the gas barrier laminate was 53 mass%.

### (Example 9)

An anchor coat layer was formed on a surface of paper and an AL vapor deposition layer was formed on the anchor coat layer in the same manner as in Example 1. A-3210/A-3075 (trade name, manufactured by Mitsui Chemicals, Inc.) was extruded onto the vapor deposition layer, and a low density polyethylene resin (LDPE) film (trade name: NOVATEC LC-600A, Japan Polyethylene Corporation) as a sealant layer was laminated on the vapor deposition layer via A-3210/A-3075 to obtain gas barrier laminate. The thickness of the adhesive layer was 5 µm. The weight of the paper relative to the gas barrier laminate was 57 mass%.

### (Example 10)

A gas barrier laminate was obtained in the same manner as in Example 1, except that an anchor coat layer was formed using a polyvinyl alcohol-based resin (saponification degree: 98%, polymerization degree: 500) instead of the coating liquid containing a salt of a carboxyl group. The weight of the paper relative to the gas barrier laminate was 53 mass%.

### (Example 11)

A gas barrier laminate was obtained in the same manner as in Example 1, except that an anchor coat layer was formed using a polyvinyl alcohol-based resin (saponification degree: 88%, polymerization degree: 500) instead of the coating liquid containing a salt of a carboxyl group. The weight of the paper relative to the gas barrier laminate was 53 mass%.

### (Example 12)

A gas barrier laminate was obtained in the same manner as in Example 1, except that an anchor coat layer was formed using a modified polyvinyl alcohol-based resin (trade name: Exceval AQ4104, manufactured by Kuraray Co., Ltd.) instead of the coating liquid containing a salt of a carboxyl group. The weight of the paper relative to the gas barrier laminate was 53 mass%.

### (Example 13)

A gas barrier laminate was obtained in the same manner as in Example 10, except that a vapor deposition layer was formed of silica instead of AL. The weight of the paper relative to the gas barrier laminate was 53 mass%.

### (Example 14)

A gas barrier laminate was obtained in the same manner as in Example 10, except that an adhesive layer was formed using EA-N370A/B (trade name, manufactured by Toyo Ink Co., Ltd.) instead of TAKELAC A525/TAKENATE A52. The weight of the paper relative to the gas barrier laminate was 53 mass%.

### (Example 15)

An anchor coat layer was formed on a surface of paper and an AL vapor deposition layer was formed on the anchor coat layer in the same manner as in Example 10. A-3210/A-3075 (trade name, manufactured by Mitsui Chemicals, Inc.) was extruded onto the vapor deposition layer, and a low density polyethylene resin (LDPE) film (trade name: NOVATEC LC-600A, Japan Polyethylene Corporation) as a sealant layer was laminated on the vapor deposition layer via A-3210/A-3075 to obtain gas barrier laminate. The thickness of the adhesive layer was 0.2 µm. The weight of the paper relative to the gas barrier laminate was 57 mass%.

### (Comparative Example 1)

A gas barrier laminate was obtained in the same manner as in Example 1, except that an anchor coat layer was formed of a urethane-curing acrylic resin, which was a cured product of acrylic polyol (acrylic polyol is a polymer of acrylic acid derivative monomers or a polymer of an acrylic acid derivative monomer and other monomers, and has a hydroxyl group at the end) and polyisocyanate, the thickness of the adhesive layer was 0.2 µm, and a low density polyethylene resin (LDPE) film (trade name: NOVATEC LC-600A, manufactured by Japan Polyethylene Corporation) was used as a sealant layer The weight of the paper relative to the gas barrier laminate was 57 mass%.

### (Comparative Example 2)

A gas barrier laminate was obtained in the same manner as in Comparative Example 1, except that the thickness of the anchor coat layer was 1 µm. The weight of the paper relative to the gas barrier laminate was 57 mass%.

### <Measurement of Water Vapor Transmission Rate>

The water vapor transmission rate of the gas barrier laminates according to Examples and Comparative Examples was measured by the MOCON method. The measurement conditions were a temperature of 40°C and a relative humidity of 90%. After the gas barrier laminates were folded with a 600 g roller at a speed of 300 mm/min, the water vapor transmission rate of the gas barrier laminates with the folds open was measured. The "outward fold" in Tables 1 to 4 indicates that the gas barrier laminate was valley-folded when viewed from the paper substrate side. Tables 1 to 4 show the results in units [g/m²·day].

### <Measurement of Oxygen Transmission Rate>

The oxygen transmission rate of the gas barrier laminates according to Examples and Comparative Examples was measured by JIS K 7126, method B (equal-pressure method). The measurement device used was an OXTRAN 2/20 manufactured by MOCON, Inc. and the measurement was performed at a temperature of 30°C and a relative humidity of 70%. Tables 1 to 4 show the results in units [cc/m²/d/atm].

### <Measurement of Heat Seal Strength>

Two sheets of the gas barrier laminates were overlapped with the sealant layers facing each other, heat-sealed with a heat sealer under conditions of 120°C, 0.2 MPa and 1 second, and cut into strips of 15 mm width. A maximum load when the strips were subjected to T-shaped peeling at a peeling rate of 300 mm/min was measured. Tables 1 to 4 show the results in units [N/15mm].

**[Table 1]**

| | | Example 1 | Example 2 | Example 3 | Example 4 | Example 5 |
|---|---|---|---|---|---|---|
| Paper substrate | | Clay-coated paper | Clay-coated paper | Clay-coated paper | Clay-coated paper | Clay-coated paper |
| Anchor coat layer | Structure of polyolefin | Carboxyl group Salt of carboxyl group | Carboxyl group Carboxylic anhydride Carboxylic ester Salt of carboxyl group | Glycidyl group | Acetyl group | Carboxyl group Salt of carboxyl group |
| | Thickness (µm) | 3 | 3 | 3 | 3 | 3 |
| Vapor deposition layer | Material | AL | AL | AL | AL | SiOₓ |
| Adhesive layer | Material | A525/A52 | A525/A52 | A525/A52 | A525/A52 | A525/A52 |
| | Thickness (µm) | 5 | 5 | 5 | 5 | 5 |
| Sealant layer | Material | LLDPE | LLDPE | LLDPE | LLDPE | LLDPE |
| | Thickness (µm) | 30 | 30 | 30 | 30 | 30 |
| Weight of paper (mass%) | | 53 | 53 | 53 | 53 | 53 |
| Water vapor transmission rate | Initial | 2.1 | 2.3 | 2.1 | 2.3 | 2.8 |
| | Outward folding | 2.5 | 2.9 | 2.9 | 2.8 | 3.1 |
| Oxygen transmission rate | Initial | > 100 | > 100 | > 100 | > 100 | > 100 |
| | Outward folding | > 100 | > 100 | > 100 | > 100 | > 100 |
| Heat seal strength | | 11.9 | 10.3 | 10.9 | 11.1 | 11.4 |

**[Table 2]**

| | | Example 6 | Example 7 | Example 8 | Example 9 |
|---|---|---|---|---|---|
| Paper substrate | | Clay-coated paper | Clay-coated paper | Clay-coated paper | Clay-coated paper |
| Anchor coat layer | Structure of polyolefin | Carboxyl group Salt of carboxyl group | Carboxyl group Salt of carboxyl group | Carboxyl group Salt of carboxyl group | Carboxyl group Salt of carboxyl group |
| | Thickness (µm) | 3 | 3 | 3 | 3 |
| Vapor deposition layer | Material | AL | AL | AL | AL |
| Adhesive layer | Material | M-100/C-93T | VM001/108CP | NSRD011/NSRD006 | A-3210/A-3075 |
| | Thickness (µm) | 5 | 5 | 5 | 0.2 |
| Sealant layer | Material | LLDPE | LLDPE | LLDPE | LDPE |
| | Thickness (µm) | 30 | 30 | 30 | 30 |
| Weight of paper (mass%) | | 53 | 53 | 53 | 57 |
| Water vapor transmission rate | Initial | 0.9 | 1.5 | 2.5 | 2.5 |
| | Outward folding | 0.9 | 1.9 | 2.8 | 2.8 |
| Oxygen transmission rate | Initial | 8.1 | 10.2 | 9.5 | > 100 |
| | Outward folding | 6.4 | 10.1 | 10.1 | > 100 |
| Heat seal strength | | 11.5 | 10.1 | 10.9 | 10.1 |

**[Table 3]**

| | | Example 10 | Example 11 | Example 12 | Example 13 | Example 14 |
|---|---|---|---|---|---|---|
| Paper substrate | | Clay-coated paper | Clay-coated paper | Clay-coated paper | Clay-coated paper | Clay-coated paper |
| Anchor coat layer | Material | Polyvinyl alcohol-based resin (saponification degree: 98%) | Polyvinyl alcohol-based resin (saponification degree: 88%) | modified polyvinyl alcohol-based resin | Polyvinyl alcohol-based resin (saponification degree: 98%) | Polyvinyl alcohol-based resin (saponification degree: 98%) |
| | Thickness (µm) | 3 | 3 | 3 | 3 | 3 |
| Vapor deposition layer | Material | AL | AL | AL | SiOₓ | AL |
| Adhesive layer | Material | A525/A52 | A525/A52 | A525/A52 | A525/A52 | EA-N370A/B |
| | Thickness (µm) | 5 | 5 | 5 | 5 | 5 |
| Sealant layer | Material | LLDPE | LLDPE | LLDPE | LLDPE | LLDPE |
| | Thickness (µm) | 30 | 30 | 30 | 30 | 30 |
| Weight of paper (mass%) | | 53 | 53 | 53 | 53 | 53 |
| Water vapor transmission rate | Initial | 1.3 | 1.5 | 1.6 | 1.6 | 1.6 |
| | Outward folding | 1.5 | 1.7 | 1.9 | 1.6 | 1.8 |
| Oxygen transmission rate | Initial | 0.5 | 0.6 | 0.7 | 0.7 | 1.1 |
| | Outward folding | 0.6 | 0.8 | 0.7 | 0.8 | 1.2 |
| Heat seal strength | | 10.5 | 10.1 | 10.9 | 10.7 | 10.1 |

**[Table 4]**

| | | Example 15 | Comparative Example 1 |
|---|---|---|---|
| Paper substrate | | Clay-coated paper | Clay-coated paper |
| Anchor coat layer | Structure of polyolefin | Polyvinyl alcohol-based resin (saponification degree: 98%) | Urethane-curing acrylic resin |
| | Thickness (µm) | 3 | 3 |
| Vapor deposition layer | Material | AL | AL |
| Adhesive layer | Material | A-3210/A-3075 | A525/A52 |
| | Thickness (µm) | 0.2 | 0.2 |
| Sealant layer | Material | LDPE | LDPE |
| | Thickness (µm) | 30 | 30 |
| Weight of paper (mass%) | | 57 | 57 |
| Water vapor transmission rate | Initial | 2.1 | 2.6 |
| | Outward folding | 2.5 | 14.1 |
| Oxygen transmission rate | Initial | 1.1 | 0.5 |
| | Outward folding | 1.4 | 3.9 |
| Heat seal strength | | 10.1 | 10.6 |

### [Reference Signs List]

- 1: Paper substrate,
- 2: Anchor coat layer,
- 3: Vapor deposition layer,
- 4: Adhesive layer,
- 5: Sealant layer,
- 10: Gas barrier laminate,
- 20: Gusset bag,
- B1, B2: Folded portion.

## Claims

1. A gas barrier laminate comprising:
a paper substrate;
an anchor coat layer containing at least one of a polyvinyl alcohol-based resin, and a polyolefin having polar groups;
a vapor deposition layer;
an adhesive layer; and
a sealant layer laminated in this order.

2. The gas barrier laminate according to claim 1, wherein
the anchor coat layer contains the polyolefin having polar groups, and
the polyolefin having polar groups contains at least one selected from the group consisting of a carboxyl group, a salt of a carboxyl group, a carboxylic anhydride and a carboxylic acid ester.

3. The gas barrier laminate according to claim 1, wherein
the anchor coat layer contains the polyolefin having polar groups, and
the polyolefin having polar groups is a copolymer of an acrylic acid ester and a maleic anhydride.

4. The gas barrier laminate according to claim 1, wherein
the anchor coat layer contains the polyolefin having polar groups, and
the polyolefin having polar groups is an ethylene-vinyl acetate copolymer.

5. The gas barrier laminate according to claim 1, wherein
the anchor coat layer contains the polyolefin having polar groups, and
the polyolefin having polar groups is an ethylene-glycidyl methacrylate copolymer.

6. The gas barrier laminate according to claim 1, wherein
the anchor coat layer contains the polyvinyl alcohol-based resin.

7. The gas barrier laminate according to any one of claims 1 to 6, wherein
the adhesive layer is a cured product of a resin composition containing an epoxy resin and an epoxy resin curing agent, and
the epoxy resin curing agent is a reaction product of metaxylylene diamine or paraxylylene diamine and an unsaturated carboxylic acid represented by formula (1) and/or derivatives thereof: 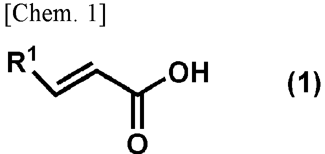 [In formula (1), R¹ represents an alkyl group having 1 to 8 carbon atoms, an aralkyl group or an aryl group having 1 to 8 carbon atoms.]

8. The gas barrier laminate according to any one of claims 1 to 6, wherein
the adhesive layer is a cured product of a resin composition containing a polyol having two or more hydroxyl groups per molecule and an isocyanate compound having two or more isocyanate groups per molecule.

9. The gas barrier laminate according to any one of claims 1 to 8, wherein
the paper substrate has a weight of 50 mass% or more of an entire gas barrier laminate.

10. A packaging bag comprising the gas barrier laminate according to any one of claims 1 to 9.

11. The packaging bag according to claim 10, wherein
the packaging bag has a folded portion.
